# EUROPÄISCHE PATENTSCHRIFT

(11) **EP 3 173 668 B1**
(45) Veröffentlichungstag und Bekanntmachung des Hinweises auf die Patenterteilung: **26.09.2018**
(21) Anmeldenummer: 16002536.7
(22) Anmeldetag: 29.11.2016
(51) Int. Cl.: F16H 59/68, F16H 61/32, F16H 63/30, F16H 25/20

(54) **GETRIEBEAKTUATOR FÜR WERKZEUGMASCHINE**
GEARBOX ACTUATOR FOR MACHINE TOOL
ACTIONNEUR DE BOÎTE DE VITESSES D'UNE MACHINE-OUTIL

(30) Priorität: 30.11.2015 DE 102015015688
(43) Veröffentlichungstag der Anmeldung: 31.05.2017
(73) Patentinhaber: Stöber Antriebstechnik GmbH & Co. KG, 75177 Pforzheim (DE)
(72) Erfinder: Vetter, Martin, 77815 Bühl (DE); Scholze, Stephan, 75305 Neuenbürg (DE); Weber, Julian, 75210 Keltern (DE); Herbst, Markus, 75428 Illingen (DE)
(74) Vertreter: Kohl, Karl-Heinz

(56) Entgegenhaltungen:
- EP-A2- 1 998 081
- US-A- 3 631 945
- US-A1- 2002 060 105
- US-A1- 2005 184 597

## Beschreibung

Die Erfindung betrifft eine Werkzeugmaschine mit einem Spindelantrieb nach dem Oberbegriff des Anspruches 1.

An Werkzeugmaschinen, wie Bearbeitungszentren oder Drehmaschinen, befinden sich angetriebene Einheiten, wie beispielsweise Spindeln oder Schlitten für Werkzeuge oder Werkstücke. Zur Einstellung unterschiedlicher Geschwindigkeiten ist ein Schaltgetriebe vorgesehen, mit dem beispielsweise zwei Gänge eingelegt werden können, wie es in US 3 631 945 A offenbart wird welche alle Merkmale des Oberbegriffs des Anspruchs 1 zeigt.

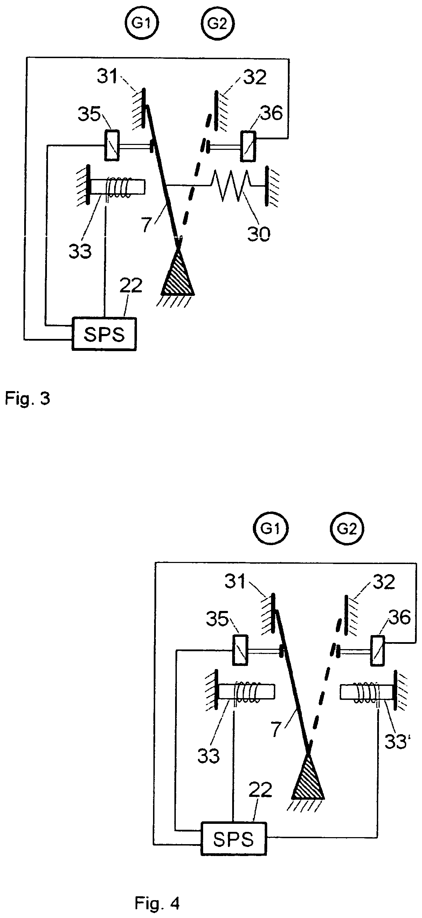

Fig. 3 zeigt beispielhaft und schematisch, wie eine solche Gangschaltung vorgenommen wird. Das Schaltgetriebe hat beispielsweise eine axial verschiebbare Schaltwelle, auf der Zahnräder unterschiedlichen Durchmessers sitzen. Je nach Lage der Schaltwelle kommen ihre Zahnräder mit Zahnrädern einer parallel zu ihr liegenden, nicht axial verschiebbaren Welle in Eingriff. Zum Verschieben der Schaltwelle dient ein Aktuator 7, der in Fig. 3 nur schematisch dargestellt ist. Er steht unter der Kraft wenigstens einer Rückholfeder 30. Die beiden Schaltstellungen des Schaltgetriebes sind mit G1 und G2 bezeichnet. Beide Schaltstellungen werden durch jeweils einen Anschlag 31, 32 bestimmt. In der Schaltstellung G1 ist der Anschlag 31 wirksam, an dem der Aktuator 7 bzw. ein von ihm angetriebenes Teil des Schaltgetriebes durch Bestromen einer Magnetspule 33 gegen die Kraft der Rückholfeder 30 gehalten werden. Soll die Schaltstellung G2 eingestellt werden, wird mittels einer Steuerung 22 die Bestromung der Magnetspule 33 abgeschaltet, wodurch der Aktuator 7 bzw. das von ihm angetriebene Stellteil des Schaltgetriebes gegen den Anschlag 32 gezogen wird. Das Fahren gegen die Anschläge 31, 32 führt zu einem vorzeitigen Verschleiß und damit zu einer verringerten Lebensdauer.

Fig. 4 zeigt eine weitere bekannte Möglichkeit der Einstellung unterschiedlicher Gänge. In diesem Falle sind zwei Magnetspulen 33, 33' vorgesehen, die jeweils dann bestromt werden, wenn der Gang G1 oder G2 eingelegt werden soll. Bei der Darstellung gemäß Fig. 4 ist die Magnetspule 33 bestromt, so dass der Aktuator 7 bzw. ein entsprechender Stellteil gegen den Anschlag 31 gezogen wird. Soll die Schaltstellung 2 eingestellt werden, wird die Bestromung der Magnetspule 33 abgeschaltet und die andere Magnetspule 33' bestromt. Dadurch wird das entsprechende Stellteil gegen den Anschlag 32 gezogen.

Wie bei der Ausführung gemäß Fig. 3 erfolgt die Ansteuerung der Magnetspulen 33, 33' durch die Steuerung 22.

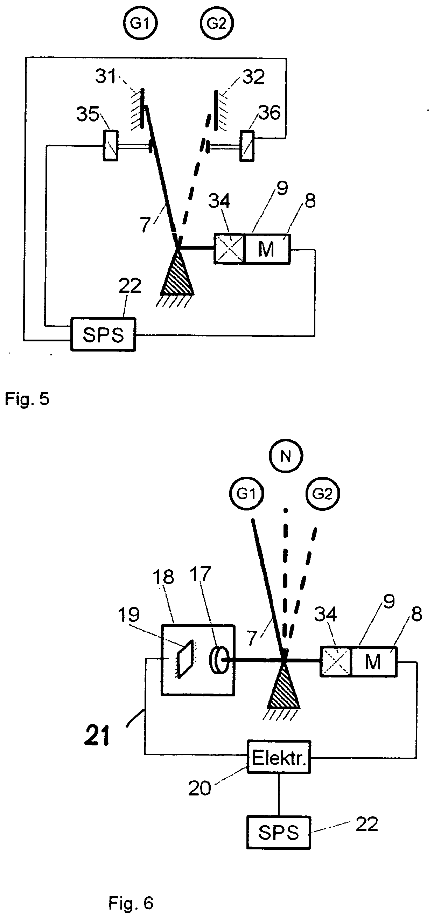

Fig. 5 zeigt schließlich eine bekannte Ausführung, bei der der Aktuator 7 einen Gleichstromgetriebemotor 8 aufweist, der über ein Getriebe 34 mit dem Aktuator 7 bzw. dem Stellteil des Schaltgetriebes antriebsverbunden ist. Die Ansteuerung des Motors 8 erfolgt über die Steuerung 22. Der Aktuator 7 bzw. das Stellteil ist wiederum zwischen den beiden Anschlägen 31, 32 verstellbar. Der Motor 8 wird so betätigt, dass das Stellteil in der Schaltstellung G1 am Anschlag 31 und in der Schaltstellung G2 am Anschlag 32 anliegt. Um die Anschlagstellungen zu erreichen, ist wie bei den vorigen Ausführungen an den Anschlägen 31, 32 jeweils ein Mikroschalter 35, 36 vorgesehen, der vom Stellteil in seiner jeweiligen Anschlagstellung betätigt wird. Die Steuerung 22 erhält dann ein entsprechendes Schaltsignal, wodurch die Steuerung 22 veranlasst wird, den Motor 8 abzuschalten.

Der Erfindung liegt die Aufgabe zugrunde, den Spindelantrieb so auszubilden, dass das Stellteil in konstruktiv einfacher Weise und dennoch zuverlässig in die unterschiedlichen Schaltpositionen verstellt werden kann.

Diese Aufgabe wird beim Spindelantrieb erfindungsgemäß mit den kennzeichnenden Merkmalen des Anspruches 1 gelöst.

Beim Spindelantrieb ist zur Positionserfassung des Stellteiles wenigstens ein Signalerzeuger vorgesehen. Er befindet sich im Erfassungsbereich einer Sensoreinheit, welche die Signale des Signalerzeugers berührungsfrei erfasst. Diese Signale werden von der Sensoreinheit einer Auswerteeinheit zugeführt, die an den Motor des Aktuators angeschlossen ist. Die Auswerteeinheit betätigt den Motor in Abhängigkeit von der Sensoreinheit zugeführten Signalen. Dadurch kann das Stellteil mit hoher Genauigkeit in die jeweilige Schaltposition verstellt werden. Anschläge zur genauen Festlegung des jeweils einzulegenden Ganges sind nicht erforderlich. Aufgrund der erfindungsgemäßen Ausbildung ist es auch möglich, das Stellteil nicht nur in die verschiedenen Schaltpositionen, sondern auch in eine Neutralposition zu verstellen, in welcher kein Antrieb des zu verstellenden Maschinenteiles erfolgt. Da zur Einstellung der unterschiedlichen Positionen keine Anschläge erforderlich sind, hat der erfindungsgemäße Spindelantrieb auch eine lange Lebensdauer. An die Auswerteeinheit ist die Steuerung angeschlossen, welche die einzustellende Position des Stellteiles vorgibt. Die Steuerung des Stellteils selbst erfolgt über die Auswerteeinheit. Je nach Bearbeitungsaufgabe muss die Spindel mit unterschiedlichen Drehzahlen angetrieben werden. Dazu muss das der Spindel vorgeschaltete Schaltgetriebe zuverlässig geschaltet werden, was mit dem Stellteil einfach möglich ist. Mit dem Schaltgetriebe kann die Spindel beispielsweise so drehbar angetrieben werden, dass mit ihr ein hohes Drehmoment (niedrige Drehzahl) oder ein kleines Drehmoment (hohe Drehzahl) erzeugt wird.

Bei einer vorteilhaften Ausführungsform ist der Signalerzeuger ein Magnet. Er lässt sich einfach montieren und ist kostengünstig.

In diesem Falle ist es vorteilhaft, wenn die Sensoreinheit wenigstens einen Hallsensor aufweist. Im Zusammenwirken mit einem magnetischen Signalerzeuger kann die jeweilige Schaltposition des Stellteiles mit hoher Genauigkeit angefahren werden.

Die Sensoreinheit kann auch einen optischen Sensor aufweisen, mit dem es ebenfalls in einfacher Weise und mit hoher Genauigkeit möglich ist, das Stellteil in die gewünschte Schaltposition zu verstellen.

Vorteilhaft ist es, den Signalerzeuger unmittelbar am Stellteil zu befestigen. Dann kann direkt die Lageveränderung des Stellteiles erfasst werden.

Grundsätzlich ist es aber auch möglich, den Signalerzeuger an einer Motorwelle des Motors des Aktuators zu befestigen. Da sich die Motorwelle entsprechend dem Verstellweg des Stellteiles um ihre Achse dreht, kann auch indirekt über die Drehung der Motorwelle die Position des Stellteiles exakt bestimmt werden.

Bei einer anderen vorteilhaften Ausführungsform ist der Signalerzeuger an einer Zwischenwelle zwischen der Motorwelle des Motors des Aktuators und dem Stellteil befestigt. Eine solche Zwischenwelle kann beispielsweise Teil einer Getriebeeinheit sein, mit der die Motorwelle mit dem Stellteil antriebsverbunden ist. Bei der Verstellung des Stellteiles führt auch die Zwischenwelle eine entsprechende Drehbewegung um ihre Achse aus. Die Drehbewegung der Zwischenwelle wird in diesem Falle vom Signalerzeuger erfasst und zur Bestimmung der Position des Stellteiles herangezogen.

Das Stellteil ist vorteilhaft um seine Achse drehbar angetrieben. In diesem Falle erfasst die Sensoreinheit den Drehweg des Stellteils.

Wenn das Stellteil Bestandteil eines Linearmotors ist und in seiner Längsrichtung verschoben wird, dann erfasst die Sensoreinheit den Verschiebeweg des Stellteiles.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsformen näher erläutert. Es zeigen
- Fig. 1: in perspektivischer Darstellung einen Aktuator für ein Schaltgetriebe des Spindelantriebes,
- Fig. 2: in schematischer Darstellung einen automatisierten Schaltvorgang eines Schaltgetriebes,
- Fig. 3 bis 5: jeweils in schematischer Darstellung verschiedene Ausführungsformen von Einrichtungen nach dem Stand der Technik zur Erkennung einer Schaltposition in einem Schaltgetriebe,
- Fig. 6: in schematischer Darstellung eine Schalteinrichtung zur Erkennung der Schaltposition eines Schaltgetriebes des Spindelantriebes,
- Fig. 7: ein Weg-Zeit-Diagramm eines Schaltvorganges,
- Fig. 8: ein aus dem Weg-Zeit-Diagramm gemäß Fig. 7 hervorgehendes Geschwindigkeitsprofil.

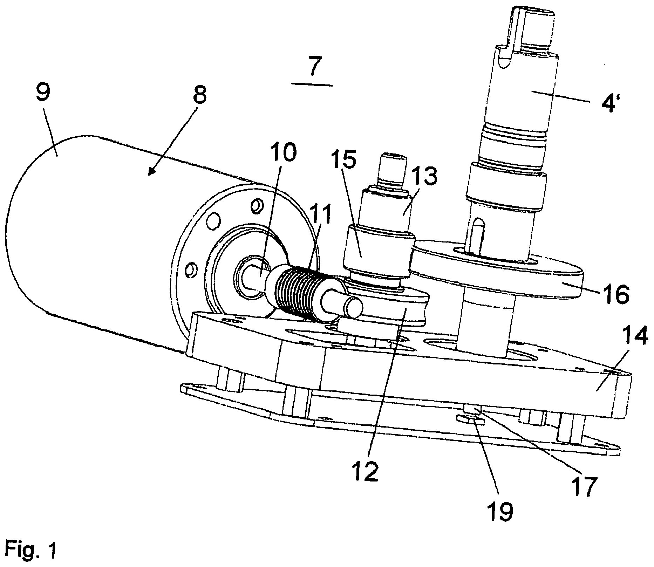

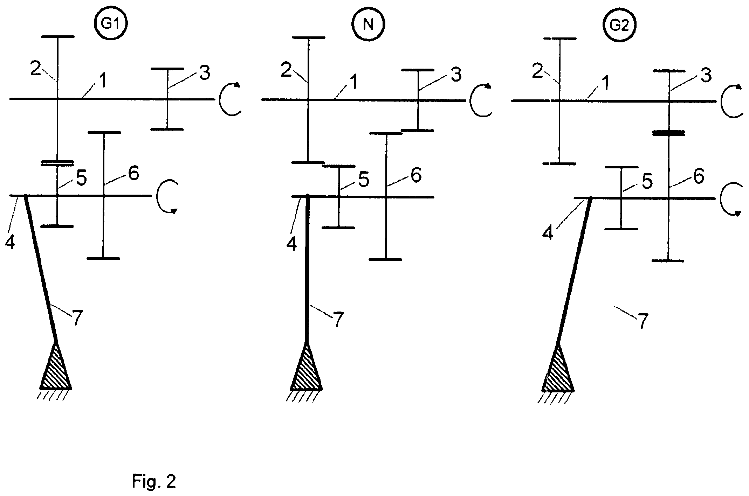

Anhand von Fig. 2 wird beispielhaft ein automatisierter Schaltvorgang beschrieben. Das Schaltgetriebe hat zwei auf einer Welle 1 drehfest und axial unverschieblich gelagerte Zahnräder 2, 3, die unterschiedlichen Durchmesser haben. Parallel zur Welle 1 liegt eine Schaltwelle 4, auf der ebenfalls drehfest und axial unverschieblich zwei Zahnräder 5 und 6 sitzen. Auch diese beiden Zahnräder haben unterschiedlichen Durchmesser und können durch einen noch zu beschreibenden Schaltvorgang in Eingriff mit den Zahnrädern 2 und 3 gebracht werden. Die Schaltwelle 4 kann mit einem schematisch dargestellten Aktuator 7 in unterschiedliche Schaltstellungen verschoben werden. Der Aktuator 7 ist nur schematisch dargestellt. Er hat beispielhaft eine Ausführungsform, wie sie anhand von Fig. 1 erläutert werden wird.

In der linken Abbildung der Fig. 2 hat die Schaltwelle 4 eine Position, in der das kleinere Zahnrad 5 mit dem größeren Zahnrad 2 der Welle 1 in Eingriff ist. Das Zahnrad 6 der Schaltwelle 4 befindet sich nicht in Eingriff. Auch das Zahnrad 3 der Welle 1 ist nicht in Eingriff mit einem Zahnrad der Schaltwelle 4. Diese Lage nimmt die Schaltwelle 4 beispielhaft dann ein, wenn der erste Gang G1 des Schaltgetriebes eingelegt ist. Die mittlere Abbildung der Fig. 2 zeigt die Neutralstellung N (Leerlauf) des Schaltgetriebes. Mit dem Aktuator 7 ist die Schaltwelle 4 so weit nach rechts verschoben worden, dass beide Zahnräder 5, 6 der Schaltwelle 4 nicht im Zahneingriff sind. Auch die Zahnräder 2, 3 auf der Welle 1 sind nicht mit Zahnrädern der Schaltwelle 4 in Eingriff.

Um den zweiten Gang G2 des Schaltgetriebes einzulegen, wird die Schaltwelle 4 mit dem Aktuator 7 weiter nach rechts verschoben, bis das im Durchmesser größere Zahnrad 6 der Schaltwelle 4 in Eingriff mit dem kleineren Zahnrad 3 der Welle 1 ist. Dafür sind die Zahnräder 2 und 5 der beiden Wellen 1, 4 nicht in Eingriff mit anderen Zahnrädern.

In Fig. 2 ist der Schaltvorgang des Schaltgetriebes nur schematisch dargestellt. Je nach Art des Schaltgetriebes sind selbstverständlich auf den Wellen 1 bzw. 4 weitere Zahnräder vorgesehen, um weitere Gänge des Schaltgetriebes einlegen zu können.

Das Schaltgetriebe ist insbesondere für Spindeln von Werkzeugmaschinen vorgesehen, insbesondere für Bearbeitungszentren oder Drehmaschinen. Da es sich um ein automatisiertes Schaltgetriebe handelt, muss die exakte Schaltstellung der Schaltwelle 4 einwandfrei festgestellt werden. Hierfür ist der Aktuator 7 so ausgebildet, dass er die jeweilige Stellung der Schaltwelle 4 und damit den jeweils eingelegten Gang zuverlässig erfassen kann, ohne dass Anschläge zur Positionsbestimmung erforderlich sind.

Fig.1 zeigt ein Ausführungsbeispiel eines solchen Aktuators 7. Er hat einen Elektromotor 8, dessen aus einem Motorgehäuse 9 ragende Motorwelle 10 eine Schnecke 11 trägt. Sie ist in Eingriff mit einem Schneckenrad 12, das drehfest und axial unverschieblich auf einer Zwischenwelle 13 sitzt. Sie ist mit einem Ende drehbar in einem Lagergehäuse 14 gelagert. Die Schnecke 11 mit dem Schneckenrad 12 bildet eine Untersetzungsstufe, mit der die hohe Drehzahl der Motorwelle 10 untersetzt wird.

Auf der Zwischenwelle 13 sitzt drehfest und axial unverschieblich ein Stirnrad 15, das mit einem Stirnrad 16 kämmt. Es sitzt drehfest auf einem Stellteil 4', dessen eines Ende im Lagergehäuse 14 drehbar gelagert ist. Die miteinander kämmenden Zahnräder 15, 16 bilden eine zweite Getriebestufe.

Das Stellteil 4' ist am Ende mit einem Magnet als Signalerzeuger 17 versehen, mit dessen Hilfe die Drehposition des Stellteiles 4' erfasst wird. Der Signalerzeuger 17 arbeitet mit wenigstens einem Hallsensor zusammen, der auf einem Chip 19 sitzt. Der Signalerzeuger 17 und der Chip 19 bilden eine Sensoreinheit 18, die mit einer Auswerteelektronik 20 über wenigstens eine Leitung 21 signalverbunden ist. An die Auswerteelektronik 20 ist auch der Elektromotor 8 des Aktuators 7 angeschlossen. An die Auswerteelektronik 20 ist weiter eine Steuerung 22 angeschlossen. Sie gibt vor, welcher Gang des Schaltgetriebes angefahren werden soll. Die von der Steuerung 22 übersandten Signale werden von der Auswerteelektronik 20 ausgewertet und zur Betätigung des Elektromotors 8 des Aktuators 7 herangezogen. Anhand der über die Leitung 21 zugeführten Signale der Sensoreinheit 18 wird die jeweilige Drehlage des Stellteiles 4' bestimmt. Je nach einzulegendem Gang muss das Stellteil 4' um ein entsprechendes Maß um seine Achse gedreht werden. Beim Drehen des Stellteiles 4' erzeugt die Sensoreinheit 18 infolge des Zusammenspieles des Signalerzeugers 17 mit dem Hallsensor der Sensoreinheit 18 ein Positionssignal, das über die Leitung 21 der Auswerteelektronik 20 zugeführt wird. Sie stellt anhand der Positionssignale fest, welche Drehlage das Stellteil 4' einnimmt. Zum Einlegen des von der Steuerung 22 angegebenen Ganges wird mittels der Auswerteelektronik 20 der Motor 8 betätigt und seine Motorwelle 10 in der erforderlichen Drehrichtung um das erforderliche Maß gedreht. Die jeweilige Schaltstellung wird durch die entsprechende Drehposition des Stellteiles 4' bestimmt. Hat die Schaltwelle 4' die gewünschte Schaltposition eingenommen, sendet die Sensoreinheit 18 ein entsprechendes Positionssignal an die Auswerteelektronik 20, die dann keine Steuersignale mehr an den Elektromotor 8 sendet, sondern ihn stillsetzt. Der Elektromotor 8 wird somit nicht mehr bestromt.

In Fig. 6 sind beispielhaft die Neutralstellung N (Leerlauf) sowie der erste und der zweite Gang G1, G2 des Schaltgetriebes schematisch dargestellt. Beim Verstellen in die verschiedenen Stellungen wird das Stellteil 4' mittels des Elektromotors 8 um seine Achse gedreht. Der Signalerzeuger 17 ermöglicht zusammen mit dem Hallsensor der Sensoreinheit 18, die exakte Drehposition des Stellteiles 4' zu erfassen. Dadurch lassen sich die verschiedenen Gänge N, G1, G2 exakt anfahren. Sobald das Stellteil 4' seine erforderliche Drehposition erreicht hat, sendet die Auswerteelektronik 20 ein Abschaltsignal an den Elektromotor 8.

Der jeweilige Gangwechsel wird ohne die Steuerung 22 durchgeführt. Sie selbst gibt nur an, welcher der Gänge N, G1, G2 angefahren werden soll.

Da der Gangwechsel ohne Rückwirkung durch die Steuerung 22 vorgenommen wird, werden äußere Einflüsse, wie die Versorgungsspannung, die Reibung, Laufzeiten und dergleichen, eliminiert, so dass die jeweilige Drehposition des Stellteiles 4' und damit die Lage der Schaltwelle 4 und der jeweilige Gang präzise eingestellt werden. Das Anfahren des Neutralganges N ist unproblematisch.

Auch werden Fehlschaltungen aufgrund ungünstiger Stellung der Zahnräder 2, 3, 5, 6 verringert. Sobald eine Blockade aufgrund ungünstiger Zahnradstellungen detektiert wird, wird der Schaltvorgang abgebrochen und neu gestartet. Die Vorrichtung hat eine lange Lebensdauer, da sie verschleißfrei bzw. verschleißarm arbeitet, weil die die Drehposition des Stellteiles 4' definierenden Signale berührungsfrei erzeugt werden.

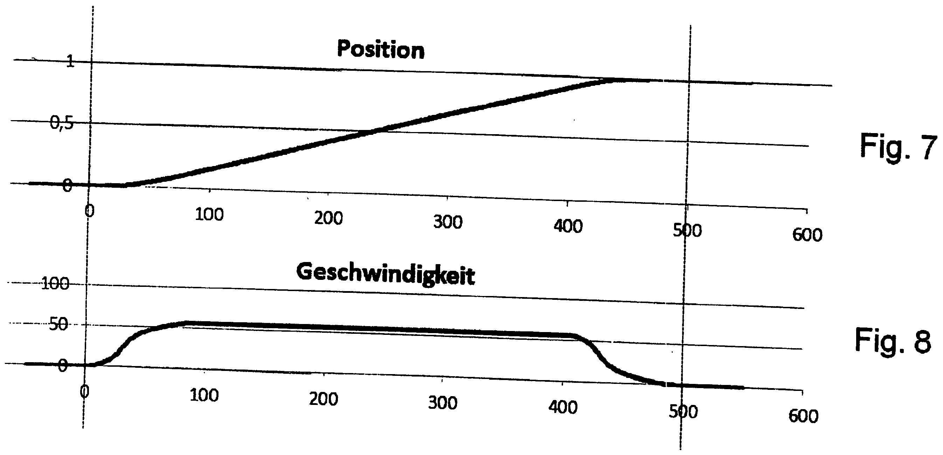

Mit dem Signalerzeuger 17 wird der Drehweg des Stellteiles 4' über die Zeit erfasst. Das beispielhafte Weg-Zeit-Diagramm ist in Fig. 7 dargestellt. Ausgehend von der Ruhelage des Stellteiles 4' wird der Drehweg x erfasst, bis das Stellteil 4' seine Endposition zum Zeitpunkt t₁ erreicht hat. Dann wird der Elektromotor 8 abgeschaltet. Die Weg-Positionssignale werden von der Sensoreinheit 18 über die Leitung 21 der Auswerteelektronik 20 zugeführt. Sie erzeugt aus den zugeführten Daten ein Geschwindigkeitsprofil, wie es beispielhaft in Fig. 8 dargestellt ist. Erkennbar ist, dass die Verstellgeschwindigkeit ausgehend von der Ruhestellung zunächst rasch ansteigt, dann etwa konstant bleibt und gegen Ende des Drehweges innerhalb kurzer Zeit auf Null abfällt. Das Geschwindigkeitsprofil gemäß Fig. 8 zeigt, dass die Verstellung des Stellteiles 4' und damit der Schaltwelle 4 innerhalb kurzer Zeit beendet ist.

Die Sensoreinheit 18 liefert exakte Signale an die Auswerteelektronik 20, so dass diese den Elektromotor 8 des Aktuators 7 zuverlässig steuern kann.

Im dargestellten Ausführungsbeispiel befindet sich der Signalerzeuger 17 auf dem Stellteil 4'. Grundsätzlich kann der Signalerzeuger 17 aber auch an der Zwischenwelle 13 oder an der Motorwelle 10 befestigt sein. In diesem Falle wird mit der Sensoreinheit 18 die Drehbewegung der Zwischenwelle 13 oder der Motorwelle 10 erfasst und daraus die jeweilige Position der Schaltwelle 4 bestimmt.

Der Aktuator 7 gemäß Fig. 1 ist so ausgebildet, dass mit ihm das Stellteil 4' um seine Achse gedreht wird, wenn die Schaltvorgänge durchgeführt werden. Der Aktuator kann aber auch so ausgebildet sein, dass mit ihm das Stellteil, wie beispielhaft anhand von Fig. 2 erläutert worden ist, in seiner Längsrichtung verschoben wird, wenn der jeweilige Gang eingelegt wird. In diesem Falle führt auch der Signalerzeuger 17 eine Verschiebebewegung aus, die von der Sensoreinheit 18 erfasst wird. Die Sensoreinheit 18 ist in diesem Falle so ausgebildet, dass sie den Verschiebeweg des Signalerzeugers 17 erfassen kann. Aus dem Verschiebeweg berechnet die Auswerteelektronik 20 wiederum das Geschwindigkeitsprofil, wie es beispielhaft in Fig. 8 dargestellt ist.

Bei einer weiteren Ausführungsform kann der Aktuator weiter so ausgebildet und angeordnet werden, dass mit ihm die Drehzahl der Spindel einer Werkzeugmaschine eingestellt wird. Der Spindel ist ein Schaltgetriebe vorgeschaltet, mit dem die unterschiedlichen Drehzahlen bzw. Drehmomente der Spindel durch entsprechendes Umstellen der Schaltwelle eingestellt werden. Das Stellteil mit dem Signalerzeuger gewährleistet in der beschriebenen Weise eine zuverlässige Schaltung. Dabei sorgt die Sensoreinheit 18 in der beschriebenen Weise für die exakte Schaltung des Schaltgetriebes.

Die Wegerfassung kann nicht nur mit dem Magneten als Signalerzeuger 17, sondern beispielsweise auch mit einem optischen Sensor vorgenommen werden, mit dem in gleicher Weise berührungslos der Weg bzw. die Wegstrecke beim Verstellvorgang erfasst werden kann.

## Patentansprüche

1. Werkzeugmaschine mit einem Spindelantrieb, der einen Antriebsmotor für die Spindel, ein Getriebe sowie eine Schalteinrichtung aufweist, **dadurch gekennzeichnet, dass** die Schalteinrichtung einen Motor (8) aufweisenden Aktuator (7) hat, mit dem ein Stellteil (4') in verschiedene Stellungen verstellbar ist, dass das Stellteil (4') in der Werkzeugmaschine angeordnet ist, dass zur Positionserfassung des Stellteiles (4') wenigstens ein Signalerzeuger (17) vorgesehen ist, der im Erfassungsbereich einer Sensoreinheit (18) liegt, welche die Signale des Signalerzeugers (17) berührungsfrei erfasst und einer Auswerteeinheit (20) zuführt, die an den Motor (8) des Aktuators (7) angeschlossen ist, und dass an die Auswerteeinheit (20) eine Steuerung (22) angeschlossen ist, die die einzustellende Position des Stellteiles (4') vorgibt.

2. Werkzeugmaschine nach Anspruch 1,
**dadurch gekennzeichnet, dass** der Signalerzeuger (17) ein Magnet ist.

3. Werkzeugmaschine nach Anspruch 1 oder 2,
**dadurch gekennzeichnet, dass** die Sensoreinheit (18) wenigstens einen Hallsensor oder einen optischen Sensor aufweist.

4. Werkzeugmaschine nach einem der Ansprüche 1 bis 3,
**dadurch gekennzeichnet, dass** der Signalerzeuger (17) am Stellteil (4') befestigt ist.

5. Werkzeugmaschine nach einem der Ansprüche 1 bis 3,
**dadurch gekennzeichnet, dass** der Signalerzeuger (17) an einer Motorwelle (10) des Motors (8) des Aktuators (7) befestigt ist.

6. Werkzeugmaschine nach einem der Ansprüche 1 bis 3,
**dadurch gekennzeichnet, dass** der Signalerzeuger (17) an einer Zwischenwelle (13) zwischen der Motorwelle (10) des Motors (8) des Aktuators (7) und dem Stellteil (4') befestigt ist.

7. Werkzeugmaschine nach einem der Ansprüche 1 bis 6,
**dadurch gekennzeichnet, dass** das Stellteil (4') um seine Achse drehbar angetrieben ist, und dass die Sensoreinheit (18) den Drehweg des Stellteiles (4') erfasst.

8. Werkzeugmaschine nach einem der Ansprüche 1 bis 6,
**dadurch gekennzeichnet, dass** das Stellteil Teil eines Linearmotors ist und in seiner Längsrichtung verschiebbar ist, und dass die Sensoreinheit (18) den Verschiebeweg des Stellteiles erfasst.

## Claims

1. A machine tool with a spindle drive, which comprises a drive motor for the spindle, a gearbox and a switching device,
**characterised in that** the switching device has an actuator (7) comprising a motor (8), with which actuator an actuating part (4') can be shifted into different positions, that the actuating part (4') is arranged in the machine tool, that at least one signal generator (17) is provided for the position detection of the actuating part (4'), which signal generator lies in the detection range of a signal unit (18), which detects the signals of the signal generator (17) in a contactless manner and feeds them to an evaluation unit (20), which is connected to the motor (8) of the actuator (7), and that a control (22) is connected to the evaluation unit (20), which control presets the position of the actuating part (4') to be set.

2. The machine tool according to claim 1,
**characterised in that** the signal generator (17) is a magnet.

3. The machine tool according to claim 1 or 2, **characterised in that** the sensor unit (18) comprises at least one Hall sensor or an optical sensor.

4. The machine tool according to any one of claims 1 to 3,
**characterised in that** the signal generator (17) is fastened to the actuating part (4').

5. The machine tool according to any one of claims 1 to 3,
**characterised in that** the signal generator (17) is fastened to a motor shaft (10) of the motor (8) of the actuator (7).

6. The machine tool according to any one of claims 1 to 3,
**characterised in that** the signal generator (17) is fastened to an intermediate shaft (13) between the motor shaft (10) of the motor (8) of the actuator (7) and the actuating part (4').

7. The machine tool according to any one of claims 1 to 6,
**characterised in that** the actuating part (4') is driven in a rotary manner about its axis, and that the sensor unit (18) detects the rotary travel of the actuator part (4').

8. The machine tool according to any one of claims 1 to 6,
**characterised in that** the actuating part is part of a linear motor and is displaceable in its longitudinal direction, and that the sensor unit (18) detects the displacement path of the actuating part.

## Revendications

1. Machine-outil, pourvue d'un entraînement de broche, qui comporte un moteur d'entraînement pour la broche, une transmission, ainsi qu'un dispositif de commutation, **caractérisée en ce que** le dispositif de commutation dispose d'un actionneur (7) comportant un moteur (8), à l'aide duquel un organe de commande (4') est réglable dans différentes positions, **en ce que** l'organe de commande (4') est placé dans la machine-outil, **en ce que** pour la détection de la position de l'organe de commande (4'), il est prévu au moins un générateur de signaux (17), qui se situe dans la zone de détection d'un module de capteurs (18), lequel détecte sans contact les signaux du générateur de signaux (17) et les amène à un module d'évaluation (20) qui est raccordé sur le moteur (8) de l'actionneur (7) et **en ce que** sur le module d'évaluation (20) est raccordé un dispositif de commande (22) qui prédéfinit la position à régler pour l'organe de commande (4').

2. Machine-outil selon la revendication 1, **caractérisée en ce que** le générateur de signaux (17) est un aimant.

3. Machine-outil selon la revendication 1 ou 2, **caractérisée en ce que** le module de capteurs (18) comporte au moins un capteur à effet Hall ou un capteur optique.

4. Machine-outil selon l'une quelconque des revendications 1 à 3, **caractérisée en ce que** le générateur de signaux (17) est fixé sur l'organe de commande (4').

5. Machine-outil selon l'une quelconque des revendications 1 à 3, **caractérisée en ce que** le générateur de signaux (17) est fixé sur un arbre moteur (10) du moteur (8) de l'actionneur (7).

6. Machine-outil selon l'une quelconque des revendications 1 à 3, **caractérisée en ce que** le générateur de signaux (17) est fixé sur un arbre intermédiaire (13), entre l'arbre moteur (10) du moteur (8) de l'actionneur (7) et l'organe de commande (4').

7. Machine-outil selon l'une quelconque des revendications 1 à 6, **caractérisée en ce que** l'organe de commande (4') est entraîné en rotation autour de son axe et **en ce que** le module de capteurs (18) détecte la course en rotation de l'organe de commande (4').

8. Machine-outil selon l'une quelconque des revendications 1 à 6, **caractérisée en ce que** l'organe de commande est une partie intégrante d'un moteur linéaire et est déplaçable dans sa direction longitudinale et **en ce que** le module de capteurs (18) détecte la course de déplacement de l'organe de commande.
